# EUROPEAN PATENT APPLICATION

(11) **EP 2 503 559 A1**
(43) Date of publication of application: **26.09.2012**
(21) Application number: 10830976.6
(22) Date of filing: 10.11.2010
(51) Int. Cl.: H01B 11/22

(54) **HYBRID PIGTAIL FOR MOBILE TELECOMMUNICATIONS**

(30) Priority: 21.11.2009 BR PI0953317
(71) Applicant: RFS Brasil Telecomunicações LTDA, 06816-000 Embu - SP (BR)
(72) Inventor: CASTRO, Drausio de, 06790-240 Taboão da Serra - SP (BR); HERMINIO, Ivo dos Santos, 06756-030 Taboão da Serra- SP (BR); KATSUDA, Sergio Massao, 04065-003 São Paulo - SP (BR)
(74) Representative: 2SPL Patentanwälte
(86) International application number: PCT/BR2010/000378
(87) International publication number: WO 2011/060518

(57) **Abstract**

HYBRID HARNESS FOR MOBILE TELECOMMUNICATIONS, whose novelty is that of combining in a single unit (1) different kinds of conductors, divided into two groups: electrical cables or wires (2) and optical cables (3), both arranged inside a suitable corrugated-tube type metal shield (4), interlocked or smooth, with any insulating coating (5), forming a hybrid unit whose ends may or may not include common electrical/optical interlink connectors between different mobile telecommunications equipment.

## Description

### FIELD OF THE INVENTION

More particularly, this invention relates to a new solution or cable optimization, combining in a single unit various types of conductors divided into two groups: electrical cables or wires and optical cables, both provided inside a corrugated-tube type metal shield, interlocked or smooth, with any kind of insulating coating, such as a polymer, forming a hybrid unit, advantageously used in mobile telecommunications (cellular system sites) in the electrical/optical interlink between different equipment, such as, for example, 3G BTS units and the active antenna unit (RRH, RRU, and others).

### STATE OF THE TECHNOLOGY

As is known, currently in mobile telephony, interconnection of the above and other similar equipment is usually accomplished by individual or separate cabling, that is, optical cables are separate from electrical cables. In addition to requiring more labor, this condition also has other implications, mainly facilitating any vandalism that may occur, and ultimately, adding the shortcomings, it must be concluded that the final cost rises significantly.

### OBJECTIVES OF THE INVENTION

A hybrid mobile harness consisting of cables and optical fibers protected by a metal shield (outer conductor) and sheathed with a layer of polymer coating, taking the following characteristics into account:
a) The electrical wires may be made of copper, aluminum, copper-plated aluminum, copper-plated steel, silver, gold, and their composite alloys;
b) the fiber optic cables are constituted by optical fibers of monomode or multimode types and their technological derivatives, coated with polymeric material or inserted into polymeric tubes with or without gel, these sets of optical fibers also being assembled together with aramid or glass fiber threads, and in addition, externally coated (cover) with polymeric material;
c) the harness is usually made up of electrical and optical fiber cables in quantities suitable for the application;
d) a metal shield (outer conductor), such as, for example, a corrugated tube, interlocked or smooth, of copper, aluminum, silver, gold, steel, or their composite alloys will be placed on the electrical/optical assembly, and
e) an insulating layer, preferably in the form of a polymer coating, is applied on the external metal shield (outer conductor).

### DESCRIPTION OF THE FIGURES

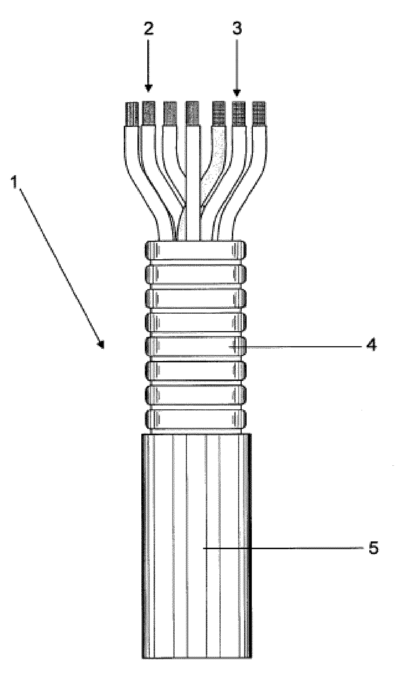

For a better understanding of the present invention, a detailed description of it is offered below, making reference to the accompanying drawing, in which Figure 1 is a schematic and illustrative view of the invention, showing a harness in accordance with the invention.

### DETAILED DESCRIPTION OF THE INVENTION

The present invention, a HYBRID HARNESS FOR MOBILE TELECOMMUNICATIONS, is characterized by the fact of combining into a single unit (1) different kinds of conductors, divided into two groups: electrical cables or wires (2) and optical cables (3), both provided within a suitable corrugated-tube type metal shield (4), interlocked or smooth, with any insulating coating (5), such as polymeric, forming a hybrid unit, whose ends may or may not include common electrical/optical interlink connectors between different mobile telecommunications equipment.

The set of electrical cables (2) is of the type formed with an outer insulating coating and a metallic core of suitable conductivity, such as copper, aluminum, copper-plated aluminum, copper-plated steel, silver, gold, and their composite alloys.

The set of fiber optic cables (3) is the type consisting of optical fibers of monomode or multimode types and their technological derivatives, coated with polymeric material or embedded in polymeric tubes with or without gel, these sets of optical fibers also being assembled together with aramid or glass fiber threads, and in addition, externally coated (cover) with polymeric material.

The dimensioning of the set is variable and compatible with each project, that is, the harness is usually made up of electrical cables and optical fibers in appropriate amounts for their application.

The metal shield (4), which is an outer conductor, is preferably a substantially flexible tube, such as, for example, a corrugated tube, interlocked or smooth, of copper, aluminum, silver, gold, steel, or their composite alloys.

The insulating layer (5) is preferably a polymeric coating.

It will be understood that certain features and combinations of the electrical cables or wires (2) and optical cables (3) may vary considerably while maintaining the same functional concept for the assembly; therefore, it should be noted that the construction described here in more detail by way of example is clearly subject to constructive variations, always, however, within the scope of the inventive concept of a hybrid harness here disclosed, and as many modifications can be made to the configuration detailed here in accordance with the descriptive requirements of the law, it should be understood that the present details are to be interpreted as illustrative and not limiting.

## Claims

1. HYBRID HARNESS FOR MOBILE TELECOMMUNICATIONS, **characterized by** the fact of combining into a single unit (1) various types of conductors divided into two groups: electrical wires or cables (2) and optical cables (3), both provided inside an appropriate corrugated-tube type metal shield (4), interlocked or smooth, with any insulating coating (5), forming a hybrid unit whose ends may or may not include common electrical/optical interlink connectors between different mobile telecommunications equipment.

2. HYBRID HARNESS FOR MOBILE TELECOMMUNICATIONS in accordance with Claim 1, **characterized by** the fact that the set of electrical cables (2) are of the type formed with an external insulating coating and a metal core of appropriate conductivity of one or more filaments, such as copper, aluminum, copper-plated aluminum, copper-plated steel, silver, gold, and their composite alloys.

3. HYBRID HARNESS FOR MOBILE TELECOMMUNICATIONS in accordance with Claim 1, **characterized by** the fact that the set of fiber optic cables (3) is preferably of the type formed by monomode or multimode optical fibers and their technological derivatives, coated with polymeric material or inserted into polymeric tubes with or without gel, these sets of optical fibers also being assembled together with aramid or glass fiber threads, and in addition, externally coated (cover) with polymeric material.

4. HYBRID HARNESS FOR MOBILE TELECOMMUNICATIONS in accordance with Claim 1, **characterized by** the fact that the dimensioning of the set is variable and compatible with each project, that is, the harness is usually made up of electrical cables and optical fibers in amounts appropriate to their application.

5. HYBRID HARNESS FOR MOBILE TELECOMMUNICATIONS in accordance with Claim 1, **characterized by** the fact that the metal shield (4), which is an outside conductor, is preferably a substantially flexible tube, such as, for example, a corrugated tube, interlocked or smooth, of copper, aluminum, silver, gold, steel, or their composite alloys.

6. HYBRID HARNESS FOR MOBILE TELECOMMUNICATIONS in accordance with Claim 1, **characterized by** the fact that the insulating layer (5) is preferably a polymeric coating.
